# FASCICULE DE BREVET EUROPEEN

(11) **EP 2 771 197 B1**
(45) Date de publication et mention de la délivrance du brevet: **30.08.2017**
(21) Numéro de dépôt: 12779057.4
(22) Date de dépôt: 26.10.2012
(51) Int. Cl.: B60C 1/00, C08K 3/04, C08K 5/01, C08L 23/22

(54) **GOMME INTERIEURE DE PNEUMATIQUE**
INNENAUSKLEIDUNG FÜR EINEN REIFEN
INNER LINING FOR A TIRE

(30) Priorité: 28.10.2011 FR 1159823
(43) Date de publication de la demande: 03.09.2014
(73) Titulaire: Compagnie Générale des Etablissements Michelin, 63000 Clermont-Ferrand (FR)
(72) Inventeur: NEGRETE, Norma, 67133 Maxdorf (DE); RIOU, Aline, F-63040 Clermont-Ferrand Cedex 9 (FR); CABIOCH, Jean-Luc, F-63040 Clermont-Ferrand Cedex 9 (FR); VOGE, Bozena, F-63040 Clermont-Ferrand Cedex 9 (FR)
(74) Mandataire: Cohen, Sylvia
(86) Numéro de dépôt international: PCT/EP2012/071283
(87) Numéro de publication internationale: WO 2013/060858

(56) Documents cités:
- WO-A1-82/02720
- FR-A1- 2 916 449
- FR-A1- 2 943 680
- US-A1- 2010 036 023

## Description

La présente invention est relative à une composition de caoutchouc pour la fabrication d'une couche intérieure de pneumatique imperméable à l'air et couramment appelée « gomme intérieure » de pneumatique.

Les pneumatiques sans chambre à air présentent en effet une surface intérieure de faible perméabilité à l'air afin d'éviter un dégonflage du pneumatique et de protéger les zones internes sensibles de ce dernier contre les arrivées d'oxygène et d'eau, telles que les nappes contenant des câbles métalliques sensibles à l'oxydation, cette protection permettant d'améliorer l'endurance du pneumatique. Aujourd'hui une telle protection de la surface intérieure des pneumatiques est réalisée par des gommes intérieures constituées par des compositions élastomériques en particulier à base de caoutchouc butyl.

Mais depuis que les économies de carburant et la nécessité de protéger l'environnement sont devenues une priorité, il est souhaitable de produire des gommes intérieures imperméables à l'air et présentant un poids et une hystérèse aussi faibles que possible, afin d'obtenir une résistance au roulement du pneumatique améliorée. Or les performances en terme d'imperméabilité à l'air des caoutchouc butyl sont liées à une épaisseur minimum non négligeable (de l'ordre du millimètre) et donc à certain poids, qui ne permet pas de répondre efficacement à ces nouvelles exigences.

Ainsi il est nécessaire d'ajouter des charges renforçantes, telles que le noir de carbone, à la composition élastomérique de gomme intérieure pour améliorer son imperméabilité. Cependant en quantité importante, ces charges renforçantes nuisent à certaines propriétés de la composition à la fois à cru : difficulté de mise en oeuvre de la composition crue, appelée couramment « processabilité », à cuit : dégradation de propriétés mécaniques notamment diminution de la résistance à la flexion. L'introduction de plastifiant de type huile permet de pallier ces aspects de mise en oeuvre et de propriétés mécaniques mais pénalise très fortement l'imperméabilité.

Différentes solutions ont été envisagées pour remédier à ces inconvénients en particulier en faisant appel à d'autres types de charges venant s'additionner aux charges renforçantes, souvent connues sous le nom de smectites et en particulier de smectites organophiles. Ces smectites organophiles améliorent les propriétés d'imperméabilité des matériaux si elles sont bien dispersés dans le matériau, c'est-à-dire à la fois une répartition homogène de ces charges au sein du matériau et une bonne comptabilité avec ce dernier. Cette dispersion est souvent difficile à obtenir du fait de la faible compatibilité thermodynamique existant entre les élastomères et de telles charges.

Le document FR2943680 divulgue une composition de caoutchouc utilisée comme couche de protection dans un pneumatique, ladite composition étant à base de caoutchouc naturel ou d'un mélange de caoutchouc naturel et de polymère styrène-butadiène, une charge renforçante, une charge lamellaire et un sel métallique.

La publication WO 08/145314 de la demanderesse décrit une composition pour gomme intérieure de pneumatique dont la composition à base de caoutchouc butyl et comprenant du noir de carbone, comporte des charges non renforçantes constituées par du graphite réduisant la perméabilité aux gaz, dispersées dans la matrice élastomérique ainsi qu'un plastifiant spécifique constitué par une résine hydrocarbonée ayant une Tg supérieure à 20°. Cette composition présente effectivement des propriétés mécaniques et d'imperméabilité la rendant acceptable pour une utilisation en tant que gomme intérieure de pneumatique, grâce à l'effet combiné du graphite et de cette résine à haute Tg.

Cependant la demanderesse a poursuivi ces recherches et a découvert de façon surprenante que certaine plage de taille moyenne des particules de graphite permettait d'obtenir dans des compositions de caoutchouc pour gomme intérieure de pneumatique ayant des propriétés mécaniques nettement améliorées par rapport aux compositions de l'art antérieur, sans dégrader par ailleurs propriétés d'imperméabilité aux gaz.

L'invention concerne donc une gomme intérieure pour pneumatique, ayant une composition de caoutchouc à base d'au moins un élastomère majoritaire choisi dans le groupe constitué par les caoutchoucs butyl, les élastomères diéniques essentiellement insaturés, les élastomères diéniques essentiellement saturés et les mélanges de ces élastomères, une charge renforçante et un système plastifiant caractérisée en ce que la composition comprend au moins un caoutchouc butyl et comprend également du graphite dont la taille moyenne de particules est inférieure à 50 µm mesurée selon les normes ISO 13320-1 et ISO 14887 et que le système plastifiant comprend une résine plastifiante hydrocarbonée dont la température de transition vitreuse, Tg mesurée par calorimétrie différentielle à balayage selon la norme ASTM D3418 (1999) est supérieure à 20°C et dont la température de ramollissement mesurée selon la norme ASTM E-28 est inférieure à 170°C.

A titre préférentiel, la taille moyenne des particules de graphite varie de 1 à 30 µm et encore plus préférentiellement de 1 à 10 µm.

Avantageusement, la matrice élastomérique de la composition de caoutchouc comprend un caoutchouc butyl, préférentiellement en tant qu'élastomère majoritaire.
Selon une caractéristique de l'invention, l'élastomère majoritaire représente 100% des élastomères de la composition.

Selon une autre caractéristique, la composition comprend au moins un deuxième élastomère également choisi dans le groupe constitué par les caoutchoucs butyl, les élastomères diéniques essentiellement insaturés, les élastomères diéniques essentiellement saturés et les mélanges de ces élastomères.

Préférentiellement, la charge renforçante comprend du noir de carbone et plus particulièrement avec un taux supérieur à 30 pce.

Selon une caractéristique de l'invention, le taux de résine plastifiante hydrocarbonée varie de 1 à 35 pce, de préférence de 2 à 20 pce et encore plus préférentiellement de 2 à 10 pce.

Selon une autre caractéristique de l'invention, le graphite peut se présenter sous forme de graphite naturel ou synthétique, expansé ou non, ou sous forme d'un un coupage de graphite naturel et/ou de graphite expansé et/ou de graphite synthétique. Le graphite est présent préférentiellement avec un taux variant de 3 à 50 pce et plus préférentiellement encore de 5 à 30 pce.

L'invention concerne également un pneumatique comportant une gomme intérieure ayant une composition de caoutchouc d'au moins un élastomère majoritaire choisi dans le groupe constitué par les caoutchoucs butyl, les élastomères diéniques essentiellement insaturés, les élastomères diéniques essentiellement saturés et les mélanges de ces élastomères, une charge renforçante et un système plastifiant caractérisé en ce que la composition comprend au moins un caoutchouc butyl et comprend également du graphite dont la taille moyenne de particules mesurée selon les normes ISO 13320-1 et ISO 14887 est inférieure à 50 µm et que le système plastifiant comprend une résine plastifiante hydrocarbonée dont la température de transition vitreuse, Tg, mesurée par calorimétrie différentielle à balayage selon la norme ASTM D3418 (1999), est supérieure à 20°C et dont la température de ramollissement mesurée selon la norme ASTM E-28 est inférieure à 170°C.

L'invention concerne encore un procédé pour préparer une composition pour gomme intérieure de pneumatique, à base d'au moins un élastomère majoritaire choisi dans le groupe constitué par les caoutchoucs butyl, les élastomères diéniques essentiellement insaturés, les élastomères diéniques essentiellement saturés et les mélanges de ces élastomères, une charge renforçante et un système plastifiant caractérisé en ce que la composition comprend au moins un caoutchouc butyl et comprend également du graphite dont la taille moyenne de particules particules mesurée selon les normes ISO 13320-1 et ISO 14887 est inférieure à 50 µm et que le système plastifiant comprend une résine plastifiante hydrocarbonée dont la température de transition vitreuse, Tg mesurée par calorimétrie différentielle à balayage selon la norme ASTM D3418 (1999) est supérieure à 20°C et dont la température de ramollissement mesurée selon la norme ASTM E-28 est inférieure à 170°, ledit procédé comportant les étapes suivantes:
- incorporer à un élastomère diénique, dans un mélangeur :
   - une charge renforçante,
   - du graphite,
   - un système plastifiant, en malaxant thermomécaniquement le tout, en une ou plusieurs fois, jusqu'à atteindre une température maximale comprise entre 110°C et 190°C ;
   - refroidir l'ensemble à une température inférieure à 100°C ;
   - incorporer ensuite :
      - un système de réticulation ;
- malaxer le tout jusqu'à une température maximale inférieure à 110°C.

### I. - MESURES ET TESTS

Les compositions de caoutchouc sont caractérisées, avant et après cuisson, comme indiqué ci-après.

### I-1. Taille de particules

La taille moyenne des particules de graphite est mesurée par diffraction laser, par exemple, à l'aide d'un appareil de diffraction laser commercialisé par la société Malvern, conformément aux normes ISO 13320-1 et ISO 14887.

### I-2. Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre).

### I-3. Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation) les modules sécants dits "nominaux" (ou contraintes apparentes, en MPa) à 10% d'allongement (noté "MA10") et 100% d'allongement ("MA100"). Toutes ces mesures de traction sont effectuées dans les conditions normales de température (23±2°C) et d'hygrométrie (50±5% d'humidité relative), selon la norme française NF T 40-101 (décembre 1979). On mesure également les contraintes à la rupture (en MPa) et les allongements à la rupture (en %), à une température de 23°C.

### I-4. Perméabilité

Les valeurs de perméabilité sont mesurées en utilisant un « testeur » de perméabilité MOCON OXTRAN 2/60 à 40°C. Des échantillons cuits sous forme de disques d'une épaisseur déterminée (approximativement 0,8 à 1 mm) sont montés sur l'appareil et rendus étanches avec de la graisse à vide. L'une des faces du disque est maintenue sous 10psi d'azote alors que l'autre face est maintenue sous 10 psi d'oxygène. On contrôle l'augmentation de la concentration en oxygène en utilisant un détecteur à oxygène « Coulox » sur la face maintenue sous azote. On note la concentration en oxygène sur la face maintenue sous azote permettant d'atteindre une valeur constante, utilisée pour déterminer la perméabilité à l'oxygène.
Une valeur arbitraire de 100 est donnée pour la perméabilité à l'oxygène du témoin, un résultat supérieur à 100 indiquant une diminution de la perméabilité à l'oxygène donc une meilleure imperméabilité.

### II. DESCRIPTION DETAILLEE DE L'INVENTION

La composition de caoutchouc pour gomme intérieure de pneumatique selon l'invention, à base d'au moins un élastomère majoritaire (c'est-à-dire pour plus de 50 pce) choisi dans le groupe constitué par les caoutchoucs butyl, les élastomères diéniques essentiellement insaturés, les élastomères diéniques essentiellement saturés et les mélanges de ces élastomères, et une charge renforçante est caractérisée en ce qu'elle comprend au moins un caoutchouc butyl et comprend également du graphite dont la taille moyenne de particules mesurée selon les normes ISO 13320-1 et ISO 14887 est inférieure à 50 µm et que le système plastifiant comprend une résine plastifiante hydrocarbonée dont la température de transition vitreuse, Tg mesurée par calorimétrie différentielle à balayage selon la norme ASTM D3418 (1999) est supérieure à 20°C et dont la température de ramollissement mesurée selon la norme ASTM E-28 est inférieure à 170°C.

Sauf indication expresse différente, les pourcentages indiqués dans la présente demande sont des % en masse.

### II-1. Elastomère ou « caoutchouc »

De façon usuelle, on utilise indifféremment dans le texte les termes « élastomère » et « caoutchouc » qui sont interchangeables.

La composition comprend avantageusement un caoutchouc butyl et encore plus avantageusement à titre d'élastomère majoritaire.
Un tel caoutchouc butyl, peut être utilisé seul, en coupage avec un ou plusieurs autres caoutchouc butyl ou élastomères diéniques.

Par caoutchouc butyl, on entend un homopolymère de poly(isobutylène) ou un copolymère de poly(isobutylène) avec de l'isoprène (dans ce cas ce caoutchouc butyl fait partie des élastomères diéniques), ainsi que les dérivés halogénés, en particulier généralement bromés ou chlorés, de ces homopolymères de poly(isobutylène) et copolymères de poly(isobutylène) et isoprène.

On citera à titre d'exemples de caoutchouc butyl convenant particulièrement à la réalisation de l'invention : les copolymères d'isobutylène et d'isoprène (IIR), les caoutchoucs bromo-butyl tels que le copolymère bromoisobutylène-isoprène (BIIR), les caoutchoucs chlorobutyl tels que le copolymère chloroisbutylène-isoprène (CIIR) et les caoutchoucs isobutylène.

Par extension de la définition précédente, on incluera également sous l'appellation « caoutchouc butyl » des copolymères d'isobutylène et de dérivés de styrène tels que les copolymères d'isobutylène et méthylstyrène bromé (BIMS) dont fait notamment partie l'élastomère nommé EXXPRO commercialisé par la société Exxon.

Par élastomère ou caoutchouc « diénique », doit être compris de manière connue un (on entend un ou plusieurs) élastomère issu au moins en partie (i.e ; un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés".
On entend en général par "essentiellement insaturé", un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha-oléfines type EPDM peuvent être qualifiés d'élastomères diéniques "essentiellement saturés" (taux de motifs d'origine diénique faible ou très faible, toujours inférieur à 15%).

Ces définitions étant données, on entend plus particulièrement par élastomère diénique, quelque soit la catégorie ci-dessus, susceptible d'être utilisé dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc diénique butyl), ainsi que les versions halogénées, en particulier chlorées ou bromées, de ce type de copolymère.

Bien qu'elle s'applique à tout type d'élastomère diénique, l'homme du métier du pneumatique comprendra que pour une utilisation en tant que gomme intérieure de pneumatique, la présente invention est de préférence mise en oeuvre avec des élastomères essentiellement saturés, en particulier du type (d) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une température de transition vitreuse, Tg, (mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

Enfin par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

### En résumé:

- Selon un mode de réalisation de l'invention : l'élastomère majoritaire de la composition conforme à l'invention est un caoutchouc butyl (en particulier pour de nombreuses applications en tant que gommes intérieures de pneumatique), ce dernier est choisi préférentiellement dans le groupe des élastomères diéniques essentiellement saturés constitué par les copolymères d'isobutène et d'isoprène et leurs dérivés halogénés, cet élastomère essentiellement saturé pouvant être utilisé en coupage avec un élastomère choisi dans le groupe des élastomère diéniques fortement insaturés constitué par les polybutadiènes (en abrégé "BR"), les polyisoprènes (IR) de synthèse, le caoutchouc naturel (NR), les copolymères de butadiène, les copolymères d'isoprène, les copolymères de butadiène-styrène (SBR), les copolymères d'isoprène-butadiène (BIR), les copolymères d'isoprène-styrène (SIR) et les copolymères d'isoprène-butadiène-styrène (SBIR) et les mélanges de ces élastomères.
- Selon un autre mode de réalisation décrit, l'élastomère majoritaire est un élastomère diénique essentiellement insaturé de la composition conforme à l'invention (notamment pour des applications en tant que gommes intérieures de pneumatique du type moto), ce dernier est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Dans ce mode de réalisation, l'élastomère diénique est majoritairement (i.e., pour plus de 50 pce) un élastomère isoprénique ou un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), BR/NR (ou BR/IR), ou encore SBR/BR/NR (ou SBR/BR/IR). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

### II-2. Charge renforçante

On peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772), voire même N990.
Dans le cas d'une utilisation de noirs de carbone avec un élastomère isoprénique, les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Lorsque les compositions de l'invention sont destinées à des bandes de roulement de pneumatique à faible résistance au roulement, la charge inorganique renforçante utilisée, en particulier s'il s'agit de silice, a de préférence une surface BET comprise entre 45 et 400 m²/g, plus préférentiellement comprise entre 60 et 300 m²/g.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) Z - A - S_{X} - A - Z ,

dans laquelle:
- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 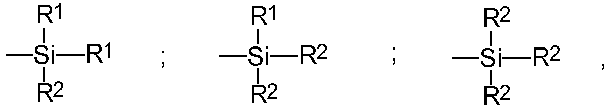 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

De manière préférentielle, le taux de charge renforçante totale (noir de carbone et/ou charge inorganique renforçante telle que silice) varie de 20 à 200 pce, plus préférentiellement de 30 à150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Pour une utilisation de la composition en tant que gomme intérieure de pneumatique, on utilise préférentiellement à titre de charge renforçante du noir de carbone dans une proportion supérieure à 30 pce. De préférence le taux de noir de carbone varie de 30 à 120 pce, en effet au-delà de ce taux la pénalisation en terme de rigidité de la composition est trop important pour une application en tant que gomme intérieure de pneumatique. Il est clair que des noirs de carbone de grade ASTM très élevé, tel que le noir de carbone N990, sont moins renforçants que des noirs de carbone de grade 700, et à fortiori 600, et qu'il est nécessaire pour un renforcement identique d'utiliser des taux plus importants de noir de carbone s'il s'agit de noirs de carbone de grade 900 que s'il s'agit de noirs de grade 600 ou 700.

Plus préférentiellement la proportion de noir de carbone varie de 30 à 70 pce, c'est en particulier le cas lors de l'utilisation de noirs de carbone de grade ASTM 600 ou 700, et encore plus préférentiellement cette proportion varie de 35 à 60 pce.

Le noir de carbone peut avantageusement constituer la seule charge renforçante ou la charge renforçante majoritaire. Bien entendu on peut utiliser un seul noir de carbone ou un coupage de plusieurs noirs de carbone de grades ASTM différents.

Le noir de carbone peut être également utilisé en coupage avec d'autres charges renforçantes et en particulier des charges inorganiques renforçantes telles que décrites précédemment, et en particulier de la silice.

### II-3 Charge de type graphite

Par graphite, on entend de manière générale un ensemble de feuillets hexagonaux non compacts d'atomes de carbone : les graphènes. Le graphite, système cristallin hexagonal, présente un empilement de type ABAB où le plan B est translaté par rapport au plan A. Le graphite ne peut pas être considéré comme une charge renforçante au sens de la définition précisée dans le paragraphe II-2, cependant il peut être considéré comme une charge semi-renforçante dans la mesure où il permet une augmentation du module en traction d'une composition de caoutchouc dans laquelle il est incorporé.

Ces définitions étant données, on entend plus particulièrement par graphite susceptible d'être utilisé dans les compositions conformes à l'invention :
- (a) tout graphite naturel, associé aux roches affectées par le métamorphisme, après séparation des impuretés accompagnant les veines de graphite et après broyage;
- (b) tout graphite naturel expansable thermiquement, i.e. dans lequel est intercalé un ou plusieurs composés chimiques à l'état liquide, par exemple un acide, entre ses plans de graphène;
- (c) tout graphite naturel expansé, ce dernier étant réalisé en deux temps : intercalation d'un ou plusieurs composés chimiques à l'état liquide, par exemple un acide, entre les plans de graphène d'un graphite naturel par traitement chimique et expansion à haute température ;
- (d) tout graphite synthétique obtenu par graphitisation de coke de pétrole.

Les compositions de l'invention peuvent contenir un seul graphite ou un mélange de plusieurs graphites, ainsi on peut avoir un coupage de graphite naturel et/ou de graphite expansé et/ou de graphite synthétique.

Le graphite tel que défini précédemment, peut se présenter sur un plan morphologique sous une forme lamellaire ou non.
On a constaté de façon surprenante que les graphites avec n'importe lequel de ces deux types de morphologie convenaient dans les compositions conformes à l'invention, cependant les graphites présentant une forme lamellaire conviennent préférentiellement, et d'autant plus lorsqu'ils sont orientés de manière a présenter leur plus grande face perpendiculairement au flux de perméation de gaz.

Le graphite est présent dans la composition conforme à l'invention dans des taux allant de 3 pce à 50 pce, et de préférence entre 5 et 30 pce.

En coupage avec le graphite peuvent être utilisées des charges inertes (non renforçantes) telles que des charges lamellaires à base de silicium et en particulier, les phyllosilicates telles que les smectites, le kaolin, le talc, le mica, la vermiculite...

Les graphites conformes à l'invention présente une taille moyenne de particules inférieure à 50 µm, de préférence variant de 1 à 30 µm et encore plus préférentiellement de 1 à 10 µm.

### II-4. - Résine plastifiante hydrocarbonée

Les compositions de caoutchouc de l'invention utilisent une résine plastifiante hydrocarbonée dont la Tg, température de transition vitreuse, est supérieure à 20°C et dont la température de ramolissement (en anglais « softening point ») est inférieure à 170°C, comme expliqué en détail ci-après.

De manière connue de l'homme du métier, la dénomination "résine plastifiante" est réservée dans la présente demande, par définition, à un composé qui est d'une part solide à température ambiante (23°C) (par opposition à un composé plastifiant liquide tel qu'une huile), d'autre part compatible (c'est-à-dire miscible au taux utilisé, typiquement supérieur à 5 pce) avec la composition de caoutchouc à laquelle il est destiné, de manière à agir comme un véritable agent diluant.

Les résines hydrocarbonées sont des polymères bien connus de l'homme du métier, miscibles donc par nature dans les compositions d'élastomère(s) lorsqu'elles sont qualifiées en outre de "plastifiantes".

Elles ont été largement décrites dans les brevets ou demandes de brevet cités en introduction du présent mémoire, ainsi que par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods").

Elles peuvent être aliphatiques, naphténiques, aromatiques ou encore du type aliphatique/ naphténique/ aromatique c'est-à-dire à base de monomères aliphatiques et/ou naphténiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De préférence, la résine plastifiante hydrocarbonée présente au moins une, plus préférentiellement l'ensemble, des caractéristiques suivantes :
- une masse moléculaire moyenne en nombre (Mn) comprise entre 400 et 2000 g/mol ;
- un indice de polymolécularité (Ip) inférieur à 3 (rappel : Ip = Mw/Mn avec Mw masse moléculaire moyenne en poids).

Plus préférentiellement, cette résine plastifiante hydrocarbonée présente au moins une, encore plus préférentiellement l'ensemble, des caractéristiques suivantes :
- une Tg supérieure à 30°C ;
- une masse Mn comprise entre 500 et 1500 g/mol ;
- un indice Ip inférieur à 2.

La température de transition vitreuse Tg est mesurée de manière connue par DSC (Differential Scanning Calorimetry), selon la norme ASTM D3418 (1999), et la température de ramolissement (« softening point ») est mesurée selon la norme ASTM E-28.

La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Selon un mode de réalisation particulièrement préférentiel, la résine plastifiante hydrocarbonée est choisie dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines.

Parmi les résines de copolymères ci-dessus sont préférentiellement utilisées celles choisies dans le groupe constitué par les résines de copolymère (D)CPD/ vinylaromatique, les résines de copolymère (D)CPD/ terpène, les résines de copolymère (D)CPD/ coupe C5, les résines de copolymère terpène/ vinylaromatique, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre.

A titre de monomère vinylaromatique conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C₉ (ou plus généralement d'une coupe C₈ à C₁₀). De préférence, le composé vinyle-aromatique est du styrène ou un monomère vinylaromatique issu d'une coupe C₉ (ou plus généralement d'une coupe C₈ à C₁₀). De préférence, le composé vinylaromatique est le monomère minoritaire, exprimé en fraction molaire, dans le copolymère considéré.

Selon un mode de réalisation plus particulièrement préférentiel, la résine plastifiante hydrocarbonée est choisie dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Les résines préférentielles ci-dessus sont bien connues de l'homme du métier et disponibles commercialement, par exemple vendues en ce qui concerne les :
résines polylimonène : par la société DRT sous la dénomination "Dercolyte L120" (Mn=625 g/mol ; Mw=1010 g/mol ; Ip=1,6 ; Tg=72°C) ou par la société ARIZONA sous la dénomination "Sylvagum TR7125C" (Mn=630 g/mol ; Mw=950 g/mol ; Ip=1,5 ; Tg=70°C) ;
résines de copolymère coupe C₅/ vinylaromatique, notamment coupe C₅/ styrène ou coupe C₅/ coupe C₉ : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "ECR 373" ;
résines de copolymère limonène/ styrène : par DRT sous dénomination "Dercolyte TS 105" de la société DRT, par ARIZONA Chemical Company sous dénominations "ZT115LT" et "ZT5100".

Le taux de résine hydrocarbonée varie préférentiellement de 1 à 35 pce. En dessous du minimum indiqué, l'effet technique visé peut s'avérer insuffisant, alors qu'au-delà du maximum le pouvoir collant des compositions à l'état cru, sur les outils de mélangeage, peut dans certains cas devenir rédhibitoire du point de vue industriel. Le taux de résine hydrocarbonée varie de préférence de 2 à 20 pce, encore plus préférentiellement de 2 à10 pce.

### II-5. Additifs divers

Les compositions de caoutchouc conformes à l'invention peuvent comporter également tout ou partie des additifs usuels habituellement utilisés dans les compositions d'élastomères destinées à la fabrication de pneumatiques ou produits semi-finis pour pneumatiques, comme par exemple d'autres plastifiants (autres que le système plastifiant de l'invention), de préférence non aromatiques ou très faiblement aromatiques, par exemple des huiles naphténiques, paraffiniques, des huiles MES ou TDAE, des esters (en particulier trioléates) de glycérol notamment des esters naturels tels que huiles végétales de colza ou de tournesol, des pigments, des agents de protection tels que agents anti-ozonants, anti-oxydants, des agents anti-fatigue, un système de réticulation à base soit de soufre, soit de donneurs de soufre et/ou de peroxyde et/ou de bismaléimides, des accélérateurs de vulcanisation, des activateurs de vulcanisation, des agents anti-réversion.

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur processabilité à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### II-6. Fabrication des compositions de caoutchouc

Les compositions sont fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé conforme à l'invention pour préparer une composition de caoutchouc pour gomme intérieure de pneumatique, comporte les étapes suivantes :
- incorporer à un élastomère, au cours d'une première étape (dite "non-productive"), au moins une charge renforçant, du graphite et une résine plastifiante hydrocarbonée dont la Tg est supérieure à 0°C, en malaxant thermomécaniquement le tout, en une ou plusieurs fois, jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (élastomère, charge renforçante et agent de couplage si nécessaire, graphite et système plastifiant), puis dans un deuxième temps, par exemple après une à deux minutes de malaxage, les autres additifs, éventuels agents de recouvrement ou de mise en oeuvre complémentaires, à l'exception du système de réticulation. Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation est préférentiellement un système de vulcanisation à base de soufre et d'un accélérateur. On peut utiliser tout composé susceptible d'agir comme accélérateur de vulcanisation des élastomères en présence de soufre, en particulier ceux choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés. De préférence, on utilise un accélérateur primaire du type sulfénamide.

A ce système de vulcanisation viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine), etc.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable comme gomme intérieure de pneumatique.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

L'invention concerne les compositions de caoutchouc précédemment décrites tant à l'état dit "cru" (i.e. avant cuisson) qu'à l'état dit "cuit" ou vulcanisé (i.e. après vulcanisation).

### III- EXEMPLES DE REALISATION DE L'INVENTION

Les exemples qui suivent permettent d'illustrer l'invention, cette dernière ne saurait cependant être limitée à ces seuls exemples.

### Préparation des compositions de caoutchouc

On procède pour les essais de la manière suivante : on introduit dans un mélangeur interne, rempli à 70% et dont la température initiale de cuve ests d'environ 60°C, successivement la charge renforçante, le graphite, le système plastifiant, le caoutchouc butyl ainsi que divers autres ingrédients éventuels à l'exception du système de vulcanisation. On conduit alors un travail thermomécanique (phase non-productive) en une étape, qui dure au total environ 3 à 4 minutes, jusqu'à atteindre une température maximale de « tombée » de 150°C.

On récupère le mélange ainsi obtenu, on le refroidit puis on incorpore du soufre et un accélérateur type sulfénamide sur un mélangeur externe (homo-finisseur) à 30°C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou feuilles fines de caoutchouc pour la mesure de leurs propriétés physiques ou mécaniques, soit extrudées sous la forme de gommes intérieures de pneumatique.

### Exemple

Cet essai a pour objet de montrer l'amélioration de performance en terme de propriétés de caoutchouterie, d'une composition conforme à l'invention par rapport à une composition témoin « classique » et trois autres compositions de l'art antérieur.

Les cinq compositions A, B, C, D et E ont été préparées conformément au procédé détaillé dans le paragraphe précédent et ont la même formulation de base suivante où les quantités sont exprimées en pce, parties en poids pour cent parties d'élastomère:

| | |
|---|---|
| Elastomère butyl (1) | 100 |
| Noir de carbone (N772) | 50 |
| Oxyde de zinc | 1,5 |
| Acide stéarique | 1,5 |
| Sulfénamide | 1,2 |
| Soufre | 1,5 |

| | |
|---|---|
| (1) : Polyisobutylène bromé « BROMOBUTYL 2222 » commercialisé par la société EXXON CHEMICAL Co. | |

Les compositions A, B, C, D et E sont définies comme suit :
- la composition témoin A est une composition de gomme intérieure de pneumatique « classique » n'incluant pas de graphite,
- les compositions B, C et D sont deux compositions correspondant à l'art antérieur de la demande de brevet WO qui comprennent du graphite dont la taille moyenne de particules est supérieure ou égale à 30µm et une résine plastifiante hydrocarbonée de Tg,
- la composition E conforme à la présente invention comprend du graphite dont la taille moyenne de particules est inférieure à 30µm et une résine plastifiante hydrocarbonée.

Les différences de formulation sont présentées dans le tableau 1 qui suit :

**Tableau 1**

| **Composition N**° | **A** | **B** | **C** | **D** | **E** |
|---|---|---|---|---|---|
| Graphite (2) | - | - | - | - | - |
| Graphite (3) | - | - | 10 | - | - |
| Graphite (4) | - | - | - | 10 | - |
| Graphite (5) | - | - | - | - | 10 |

| | | | | | |
|---|---|---|---|---|---|
| (2) Graphite naturel dénommé « TIMREX GA96/100-300» commercialisé par la société Timcal, de taille moyenne de particules 200 µm (3) Graphite naturel dénommé «TIMREX 80*150» commercialisé par la société Timcal, de taille moyenne de particules 110µm (4) Graphite naturel dénommé «TIMREX GA95/75» commercialisé par la société Timcal, de taille moyenne de particules 56 µm (5) Graphite naturel dénommé «TIMREX GB 99/6» commercialisé par la société Timcal, de taille moyenne de particules 6 µm. | | | | | |

Les propriétés de caoutchouterie de ces cinq compositions sont mesurées avant cuisson et après cuisson à 150°C pendant 60 minutes, les résultats obtenus sont portés sur le tableau 2.

**Tableau 2**

| **Composition N°** | **A** | **B** | **C** | **D** | **E** |
|---|---|---|---|---|---|
| Propriétés avant cuisson | | | | | |
| Mooney | 64 | 52 | 52 | 52 | 53 |
| Propriétés après cuisson | | | | | |
| MA100 (MPa) | 1,0 | 0,95 | 0,96 | 1,0 | 1,0 |
| MA300 (MPa) | 1,0 | 0,70 | 0,70 | 0,72 | 0,81 |
| Contrainte rupture (MPa) | 26,3 | 8,7 | 10,6 | 11,3 | 22,4 |
| Allongement rupture (%) | 352 | 245 | 284 | 180 | 472 |
| Perméabilité à l' oxygène | 100 | 134 | 133 | 133 | 133 |

On constate que les différentes compositions (B, C, D et E) comportant du graphite (quel que soit sa taille de particule) présente à la fois une meilleure processabilité (valeur de Mooney inférieure) que la composition classique A et une imperméabilité aux gaz nettement améliorées par rapport à cette même composition A, avec des propriétés très proches les unes des autres en terme de modules (MA100, MA300)

Par contre, on voit que seule la composition E conforme à l'invention la composition, permet d'obtenir des propriétés d'allongement et de déformation à la rupture équivalente à celle de la composition témoin classique A.

Ainsi la composition E conforme à l'invention incluant du graphite ayant une taille de particules inférieure à 50 µm permet une amélioration des propriétés de processabilité et d'étanchéité par rapport à une composition classique A sans dégradation des propriétés d'énergie à la rupture contrairement aux compositions non-conformes à l'invention , C et D.

## Revendications

1. Gomme intérieure pour pneumatique, ayant une composition de caoutchouc à base d'au moins un élastomère majoritaire choisi dans le groupe constitué par les caoutchoucs butyl, les élastomères diéniques essentiellement insaturés, les élastomères diéniques essentiellement saturés et les mélanges de ces élastomères, une charge renforçante et un système plastifiant **caractérisée en ce que** la composition comprend au moins un caoutchouc butyl et comprend également du graphite dont la taille moyenne de particules mesurée selon les normes ISO 13320-1 et ISO 14887 est inférieure à 50 µm et que le système plastifiant comprend une résine plastifiante hydrocarbonée dont la température de transition vitreuse Tg mesurée par calorimétrie différentielle à balayage selon la norme ASTM D3418 (1999) est supérieure à 20°C et dont la température de ramolissement mesurée selon la norme ASTM E-28 est inférieure à 170°C.

2. Gomme intérieure selon la revendication 1, dans laquelle le caoutchouc butyl est un copolymère d'isobutène et d'isoprène.

3. Gomme intérieure selon la revendication 1, dans laquelle le caoutchouc butyl est un polyisobutylène bromé ou chloré.

4. Gomme intérieure selon l'une quelconque des revendications 1 à 3, dans laquelle le caouthcouc butyl constitue l'élastomère majoritaire de la composition.

5. Gomme intérieure selon l'une quelconque des revendications 1 à 4, qui comprend un ou plusieurs autres élastomères choisi dans le groupe constitué par les caoutchoucs butyl, les élastomères diéniques essentiellement insaturés, les élastomères diéniques essentiellement saturés et les mélanges de ces élastomères.

6. Gomme intérieure selon l'une quelconque des revendications précédentes, dans laquelle la taille moyenne des particules de graphite varie de 1 à 30 µm, de préférence de 1 à 10 µm.

7. Gomme intérieure selon l'une quelconque des revendications 1 à 6, dans laquelle le graphite se présente sous une forme lamellaire.

8. Gomme intérieure selon l'une quelconque des revendications 1 à 7, dans laquelle le graphite est un graphite naturel.

9. Gomme intérieure selon l'une quelconque des revendications précédentes, dans laquelle le taux de graphite varie de 5 à 30 pce.

10. Gomme intérieure selon l'une quelconque des revendications précédentes, dans laquelle la résine plastifiante hydrocarbonée a une Tg supérieure à +30°C.

11. Gomme intérieure selon l'une quelconque des revendications précédentes, dans laquelle le taux de résine plastifiante hydrocarbonée varie de 1 à 35 pce, de préférence de 2 à 20 pce, encore plus préférentiellement de 2 à 10 pce.

12. Gomme intérieure selon l'une quelconque des revendications 1 à 11, dans laquelle la résine plastifiante hydrocarbonée est choisie dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

13. Gomme intérieure selon l'une quelconque des revendications précédentes, dans la charge renforçante comprend du noir de carbone avec un taux variant de 30 à 70 pce.

14. Gomme intérieure selon l'une quelconque des revendications précédentes, dans laquelle la charge renforçante comprend une charge inorganique renforçante, de préférence de la silice.

15. Pneumatique comportant une gomme intérieure selon l'une quelconque des revendications 1 à 14.

16. Procédé pour préparer une composition de caoutchouc à base d'au moins un élastomère majoritaire choisi dans le groupe constitué par les caoutchoucs butyl, les élastomères diéniques essentiellement insaturés, les élastomères diéniques essentiellement saturés et les mélanges de ces élastomères, et une charge renforçante, **caractérisé en ce que** la composition comprend au moins un caoutchouc butyl et comprend également du graphite dont la taille moyenne de particules mesurée selon les normes ISO 13320-1 et ISO 14887 est inférieure à 50 µm et que le système plastifiant comprend une résine plastifiante hydrocarbonée dont la température de transition vitreuse Tg mesurée par calorimétrie différentielle à balayage selon la norme ASTM D3418 (1999) est supérieure à 20°C et dont la température de ramolissement mesurée selon la norme ASTM E-28 est inférieure à 170°, ledit procédé comportant les étapes suivantes:
- incorporer à un élastomère diénique, dans un mélangeur :
- une charge renforçante,
- du graphite,
- une huile polyisobutylène,
en malaxant thermomécaniquement le tout, en une ou plusieurs fois, jusqu'à atteindre une température maximale comprise entre 110°C et 190°C ;
- incorporer ensuite :
- un système de réticulation ;
- malaxer le tout jusqu'à une température maximale inférieure à 110°C.

## Patentansprüche

1. Innenseele für Reifen mit einer Kautschukzusammensetzung auf Basis mindestens eines Hauptelastomers aus der Gruppe bestehend aus Butylkautschuken, im Wesentlichen ungesättigten Dienelastomeren, im Wesentlichen gesättigten Dienelastomeren und Mischungen dieser Elastomere, eines verstärkenden Füllstoffs und eines Weichmachersystems, **dadurch gekennzeichnet, dass** die Zusammensetzung mindestens einen Butylkautschuk umfasst und außerdem Graphit, dessen gemäß den ISO-Normen 13320-1 und 14887 gemessene mittlere Teilchengröße kleiner als 50 µm ist, umfasst und dass das Weichmachersystem ein Kohlenwasserstoff-Weichmacherharz mit einer durch Differentialkalorimetrie gemäß der ASTM-Norm D3418 (1999) gemessenen Glasübergangstemperatur Tg von mehr als 20°C und einer gemäß der ASTM-Norm E-28 gemessenen Erweichungstemperatur von weniger als 170°C umfasst.

2. Innenseele nach Anspruch 1, wobei es sich bei dem Butylkautschuk um ein Copolymer von Isobuten und Isopren handelt.

3. Innenseele nach Anspruch 1, wobei es sich bei dem Butylkautschuk um ein bromiertes oder chloriertes Polyisobutylen handelt.

4. Innenseele nach einem der Ansprüche 1 bis 3, wobei der Butylkautschuk das Hauptelastomer der Zusammensetzung darstellt.

5. Innenseele nach einem der Ansprüche 1 bis 4, die ein oder mehrere andere Elastomere aus der Gruppe bestehend aus Butylkautschuken, im Wesentlichen ungesättigten Dienelastomeren, im Wesentlichen gesättigten Dienelastomeren und Mischungen dieser Elastomere umfasst.

6. Innenseele nach einem der vorhergehenden Ansprüche, wobei die mittlere Größe der Graphitteilchen von 1 bis 30 µm, vorzugsweise von 1 bis 10 µm, variiert.

7. Innenseele nach einem der Ansprüche 1 bis 6, wobei der Graphit in einer lamellaren Form vorliegt.

8. Innenseele nach einem der Ansprüche 1 bis 7, wobei es sich bei dem Graphit um einen natürlichen Graphit handelt.

9. Innenseele nach einem der vorhergehenden Ansprüche, wobei der Graphitgehalt von 5 bis 30 phr variiert.

10. Innenseele nach einem der vorhergehenden Ansprüche, wobei das Kohlenwasserstoff-Weichmacherharz eine Tg von mehr als +30°C aufweist.

11. Innenseele nach einem der vorhergehenden Ansprüche, wobei der Gehalt an Kohlenwasserstoff-Weichmacherharz von 1 bis 35 phr, vorzugsweise von 2 bis 20 phr, noch weiter bevorzugt von 2 bis 10 phr, variiert.

12. Innenseele nach einem der Ansprüche 1 bis 11, wobei das Kohlenwasserstoff-Weichmacherharz aus der Gruppe bestehend aus (D)CPD-Homopolymerharzen, (D)CPD/Styrol-Copolymerharzen, Polylimonenharzen, Limonen/Styrol-Copolymerharzen, Limonen/(D)CPD-Copolymerharzen, C5-Schnitt/Styrol-Copolymerharzen, C5-Schnitt/C9-Schnitt-Copolymerharzen und Mischungen dieser Harze ausgewählt ist.

13. Innenseele nach einem der vorhergehenden Ansprüche, in der verstärkende Füllstoff Ruß mit einem Gehalt von 30 bis 70 phr umfasst.

14. Innenseele nach einem der vorhergehenden Ansprüche, wobei der verstärkende Füllstoff einen verstärkenden anorganischen Füllstoff, vorzugsweise Kieselsäure, umfasst.

15. Reifen mit einer Innenseele nach einem der Ansprüche 1 bis 14.

16. Verfahren zur Herstellung einer Kautschukzusammensetzung auf Basis mindestens eines Hauptelastomers aus der Gruppe bestehend aus Butylkautschuken, im Wesentlichen ungesättigten Dienelastomeren, im Wesentlichen gesättigten Dienelastomeren und Mischungen dieser Elastomere und eines verstärkenden Füllstoffs, **dadurch gekennzeichnet, dass** die Zusammensetzung mindestens einen Butylkautschuk umfasst und außerdem Graphit, dessen gemäß den ISO-Normen 13320-1 und 14887 gemessene mittlere Teilchengröße kleiner als 50 µm ist, umfasst und dass das Weichmachersystem ein Kohlenwasserstoff-Weichmacherharz mit einer durch Differentialkalorimetrie gemäß der ASTM-Norm D3418 (1999) gemessenen Glasübergangstemperatur Tg von mehr als 20°C und einer gemäß der ASTM-Norm E-28 gemessenen Erweichungstemperatur von weniger als 170°C umfasst, bei dem man:
- in einem Mischer:
- einen verstärkenden Füllstoff,
- Graphit,
- ein Polyisobutylenöl
in ein Dienelastomer einarbeitet, indem man das Ganze ein- oder mehrmals thermomechanisch knetet, bis eine Höchsttemperatur zwischen 110°C und 190°C erreicht ist;
- dann:
- ein Vernetzungssystem
einarbeitet und
- das Ganze bis zu einer Höchsttemperatur von weniger als 110°C knetet.

## Claims

1. Tyre inner liner, having a rubber composition based on at least one predominant elastomer selected from the group consisting of butyl rubbers, essentially unsaturated diene elastomers, essentially saturated diene elastomers and the mixtures of these elastomers, a reinforcing filler and a plasticizing system, **characterized in that** the composition comprises at least one butyl rubber and also comprises graphite, the mean particle size of which, measured according to Standards ISO 13320-1 and ISO 14887, is less than 50 µm, and **in that** the plasticizing system comprises a plasticizing hydrocarbon resin, the glass transition temperature Tg of which, measured by differential scanning calorimetry according to Standard ASTM D3418 (1999), is greater than 20°C and the softening point of which, measured according to Standard ASTM E-28, is less than 170°C.

2. Inner liner according to Claim 1, in which the butyl rubber is a copolymer of isobutene and isoprene.

3. Inner liner according to Claim 1, in which the butyl rubber is a brominated or chlorinated polyisobutylene.

4. Inner liner according to any one of Claims 1 to 3, in which the butyl rubber constitutes the predominant elastomer of the composition.

5. Inner liner according to any one of Claims 1 to 4, which comprises at least one or more other elastomers selected from the group consisting of butyl rubbers, essentially unsaturated diene elastomers, essentially saturated diene elastomers and the mixtures of these elastomers.

6. Inner liner according to any one of the preceding claims, in which the mean size of the graphite particles varies from 1 to 30 µm, preferably from 1 to 10 µm.

7. Inner liner according to any one of Claims 1 to 6, in which the graphite is provided in a lamellar form.

8. Inner liner according to any one of Claims 1 to 7, in which the graphite is a natural graphite.

9. Inner liner according to any one of the preceding claims, in which the graphite content varies from 5 to 30 phr.

10. Inner liner according to any one of the preceding claims, in which the plasticizing hydrocarbon resin has a Tg of greater than +30°C.

11. Inner liner according to any one of the preceding claims, in which the content of plasticizing hydrocarbon resin varies from 1 to 35 phr, preferably from 2 to 20 phr and more preferably still from 2 to 10 phr.

12. Inner liner according to any one of Claims 1 to 11, in which the plasticizing hydrocarbon resin is selected from the group consisting of (D)CPD homopolymer resins, (D)CPD/styrene copolymer resins, polylimonene resins, limonene/styrene copolymer resins, limonene/D(CPD) copolymer resins, C₅ fraction/styrene copolymer resins, C₅ fraction/C₉ fraction copolymer resins and the mixtures of these resins.

13. Inner liner according to any one of the preceding claims, in the reinforcing filler comprises carbon black with a content varying from 30 to 70 phr.

14. Inner liner according to any one of the preceding claims, in which the reinforcing filler comprises a reinforcing inorganic filler, preferably silica.

15. Tyre comprising an inner liner according to any one of Claims 1 to 14.

16. Process for preparing a rubber composition based on at least one predominant elastomer selected from the group consisting of butyl rubbers, essentially unsaturated diene elastomers, essentially saturated diene elastomers and the mixtures of these elastomers, and a reinforcing filler, **characterized in that** the composition comprises at least one butyl rubber and also comprises graphite, the mean particle size of which, measured according to Standards ISO 13320-1 and ISO 14887, is less than 50 µm, and **in that** the plasticizing system comprises a plasticizing hydrocarbon resin, the glass transition temperature Tg of which, measured by differential scanning calorimetry according to Standard ASTM D3418 (1999), is greater than 20°C and the softening point of which, measured according to Standard ASTM E-28, is less than 170°C, the said process comprising the following stages:
- incorporating in a diene elastomer, in a mixer:
- a reinforcing filler,
- graphite,
- a polyisobutylene oil,
everything being kneaded thermomechanically, in one or more goes, until a maximum temperature of between 110°C and 190°C is reached;
- subsequently incorporating:
- a crosslinking system;
- kneading everything up to a maximum temperature of less than 110°C.
